# EUROPEAN PATENT APPLICATION

(11) **EP 2 110 037 A1**
(43) Date of publication of application: **21.10.2009**
(21) Application number: 08007434.7
(22) Date of filing: 16.04.2008
(51) Int. Cl.: A43B 9/12, B29D 31/50, B29D 31/508, B29D 31/512

(54) **Method and mold for making a shoe**

(71) Applicant: Chi, Cheng-Hsian, Hsi-Tun Dist Taichung City (TW)
(72) Inventor: Chi, Cheng-Hsian, Hsi-Tun Dist Taichung City (TW)
(74) Representative: Vossius & Partner

(57) **Abstract**

A method for making a shoe (80) includes the steps of: a) preparing a mold (40) including a first mold part (41), a second mold part (42) connected pivotally to the first mold part (41), and a cover (43) connected pivotally to one of the first and second mold parts (41, 42); b) placing an upper (50) and a sole unit (60) in the first mold part (41); c) turning the second mold part (42) to the first mold part (41) so that the first and second mold parts (41, 42) press left and right sides of each of the upper (50) and the sole unit (60); and (d) turning the cover part (43) to the first and second mold parts (41, 42) so that the cover part (43) presses the sole unit (60). (Fig. 7)

## Description

The invention relates to a method for making a shoe, more particularly to a method for assembling an upper and a sole unit of the shoe. The invention also relates to a mold for making the shoe.

Referring to Figures 1 and 2, U. S. Patent Application Publication No. 2003/0066595 discloses a method for making a shoe, which includes the steps of:
a) preparing an upper 11, and a sole unit 12 including an insole blank 13 and an outsole 14;
b) fittingly sleeving the upper 11 on a last 21, and clipping the upper 11 on the last 21 with an upper mold part 22 of a mold 23, which additionally includes a bottom mold part 24 and two opposite side mold parts 25;
c) applying an adhesive layer to a top surface of the outsole 14 and a peripheral bottom edge of the upper 11, and placing a thermal-setting adhesive film 15 on a top surface of the insole blank 13;
d) adhering a peripheral edge 131 of the insole blank 13 to the upper 11;
e) placing the sole unit 12 and the upper 11 together with the last 21 on the bottom mold part 24 of the mold 23, and closing the mold 23;
f) adhering the insole blank 13 to the outsole 14 by heating and pressing the mold 23, and at the same time, melting the thermal-setting adhesive film 15 and adhering the upper 11 to the insole blank 13;
g) cooling the mold 23; and
h) opening the mold 23 and trimming the shoe thus produced to obtain a final shoe product.

Since the upper, bottom, and side mold parts 22, 23, 25 of the mold 23 are separate and independent from each other, it is relatively difficult and time-wasting to position the upper, bottom, and side mold parts 22, 23, 25 of the mold 23 precisely, and a relatively large amount of waste material should be trimmed from the shoe thus produced. Furthermore, when a shoe of a different size is intended to be made, the upper, bottom, and side mold parts 22, 23, 25 having different sizes should be calibrated and adjusted prior to the molding process. Therefore, the production efficiency may be reduced. Additionally, since the insole blank 13 should be adhered to the upper 11 prior to the molding process, the aforesaid method is relatively complicated.

Therefore, the object of the present invention is to provide a method for making a shoe in order to reduce the amount of waste material that should be trimmed, to increase the production efficiency by simplifying the production procedure, and to reduce the production cost.

In an aspect of this invention, the method for making a shoe includes the steps of:
a) preparing a mold that includes a first mold part, a second mold part connected pivotally to the first mold part, and a cover part connected pivotally to one of the first and second mold parts;
b) placing an upper and a sole unit in the first mold part;
c) turning the second mold part to the first mold part so that the first and second mold parts press left and right sides of each of the upper and the sole unit; and
d) turning the cover part to the first and second mold parts so that the cover part presses the sole unit.

In another aspect of this invention, the mold for making a shoe having an upper and a sole unit includes a first mold part, a second mold part, and a cover part. The first mold part is adapted to receive a part of the upper and a part of the sole unit. The second mold part is adapted to receive the other part of the upper and the other part of the sole unit, and is connected pivotally to the first mold part to move leftward or rightward relative to the first mold part. The cover part is adapted to receive the remaining part of the sole unit and is connected pivotally to one of the first and second mold parts so as to move upward or downward. The first and second mold parts and the cover part cooperatively define an assembly cavity that has an opening opposite to the cover part and that is adapted for extension of a last.

Other features and advantages of the present invention will become apparent in the following detailed description of the preferred embodiment with reference to the accompanying drawings, of which:

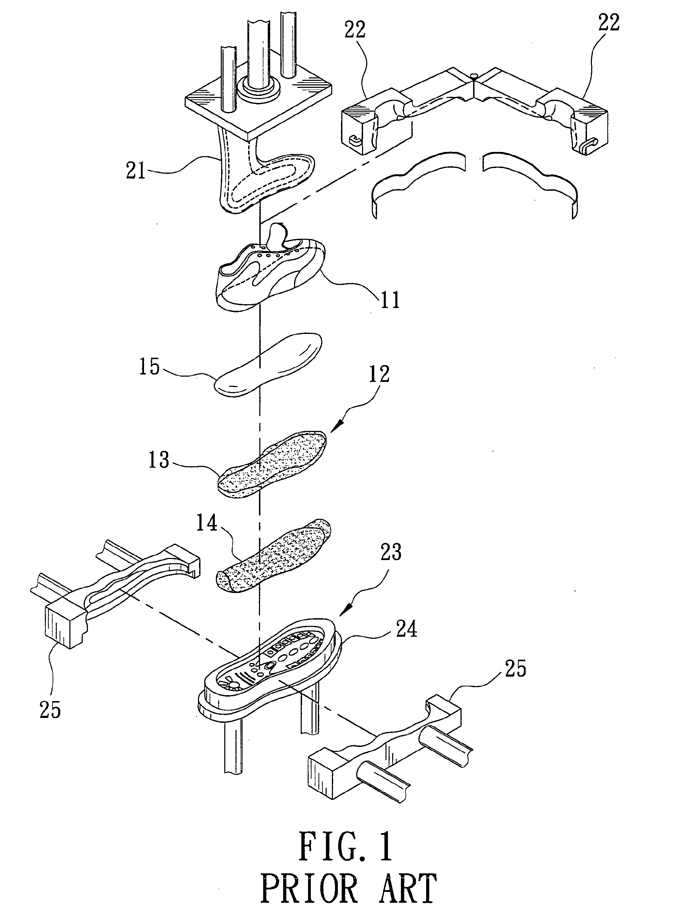

Figure 1 is an exploded perspective view illustrating a conventional method for making a shoe disclosed in U.S. Patent Application Publication No. 2003/0066595;

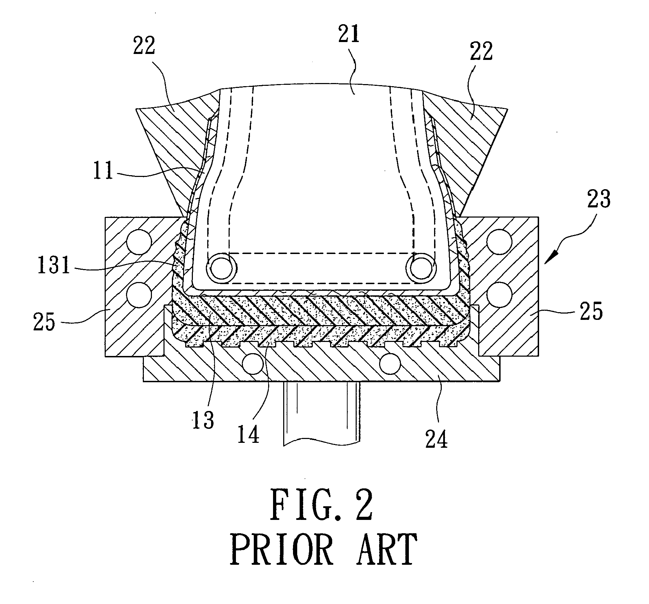

Figure 2 is a sectional view illustrating the conventional method;
Figure 3 is a flow diagram of a preferred embodiment of a method for making a shoe according to this invention;
Figure 4 is a perspective view of a first example of a mold useful in the preferred embodiment;
Figure 5 is a schematic view of the first example of the mold in a closed state;
Figure 6 is a schematic view of the first example of the mold in an opened state;
Figure 7 is a sectional view of the first example of the mold;
Figure 8 is a sectional view of the first example of the mold for assembling an upper and a sole unit including an insole and an outsole;
Figure 9 is a perspective view of a second example of a mold useful in the preferred embodiment; and
Figure 10 is a sectional view of the second example.

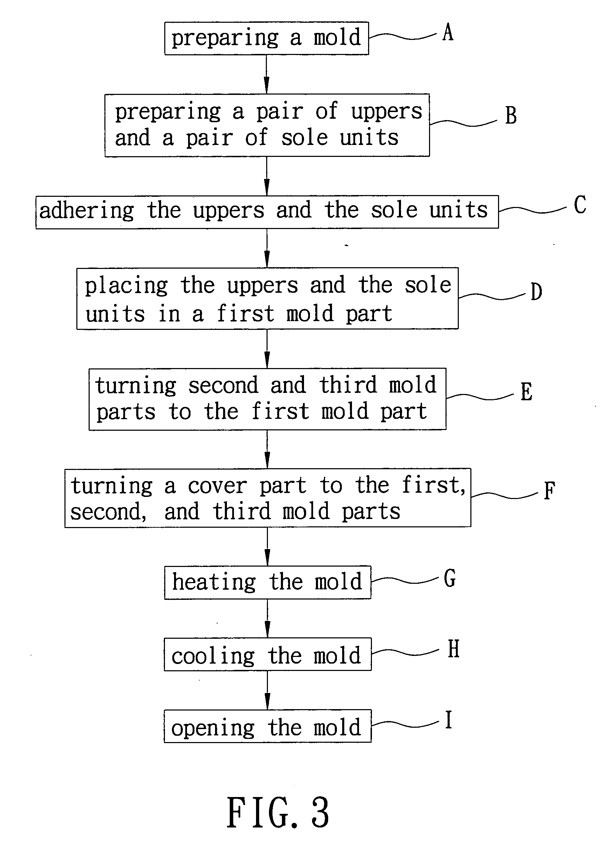

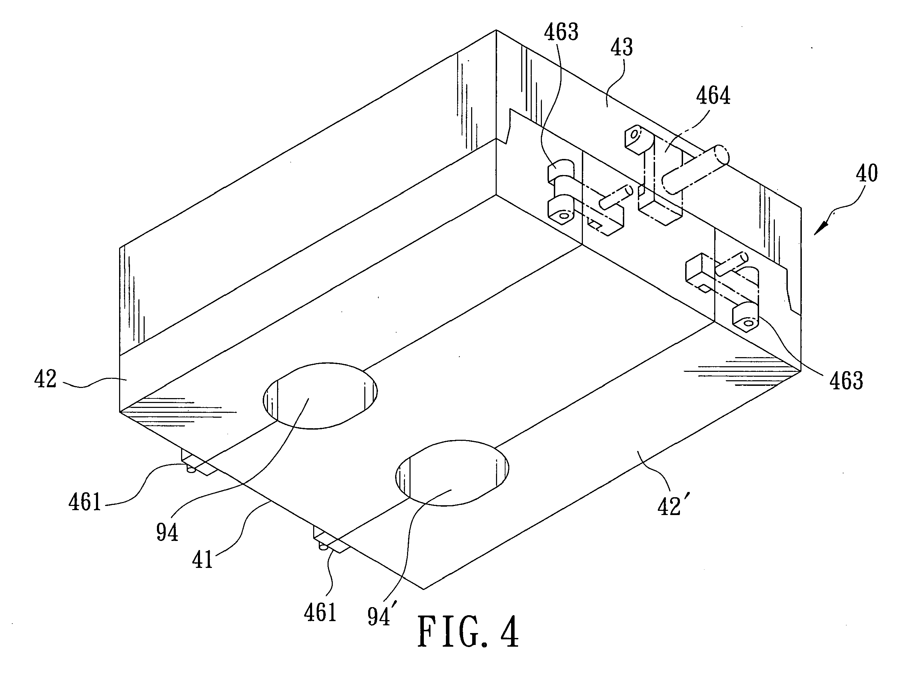

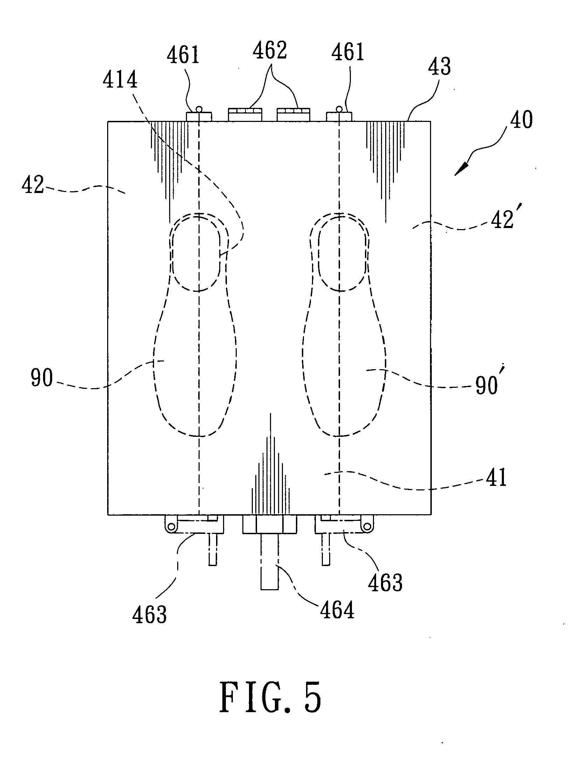

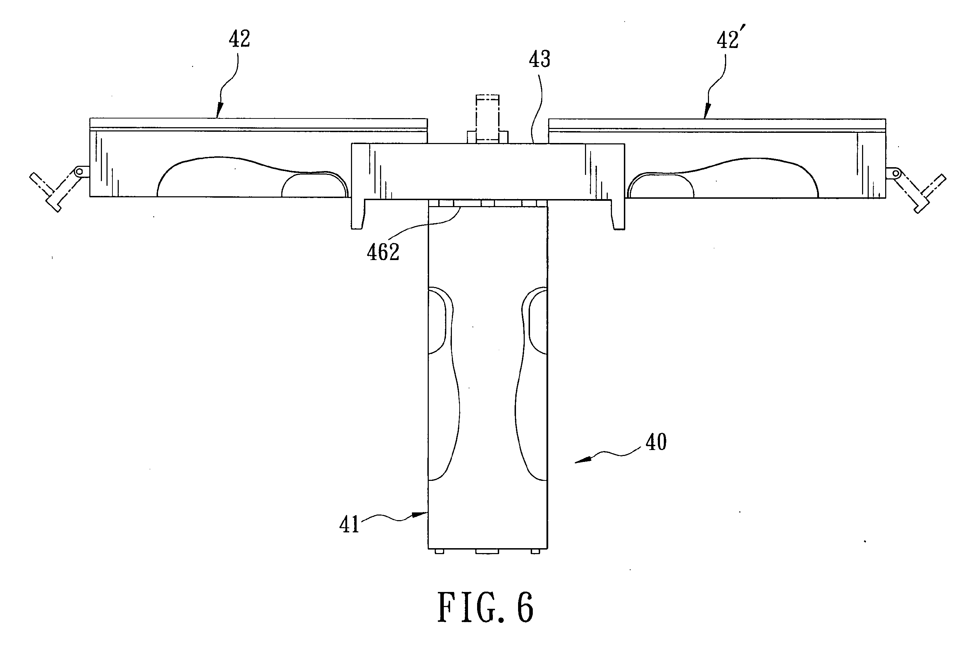

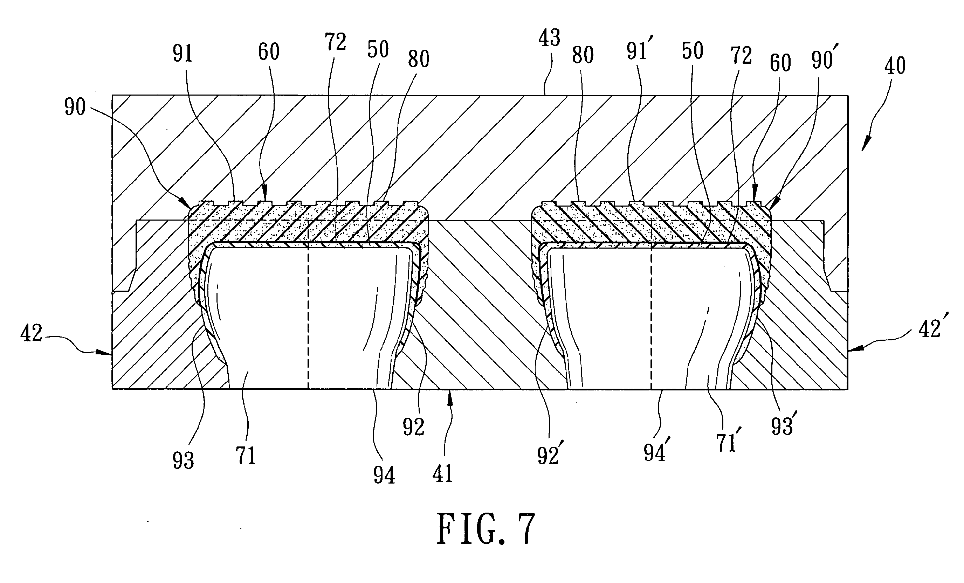

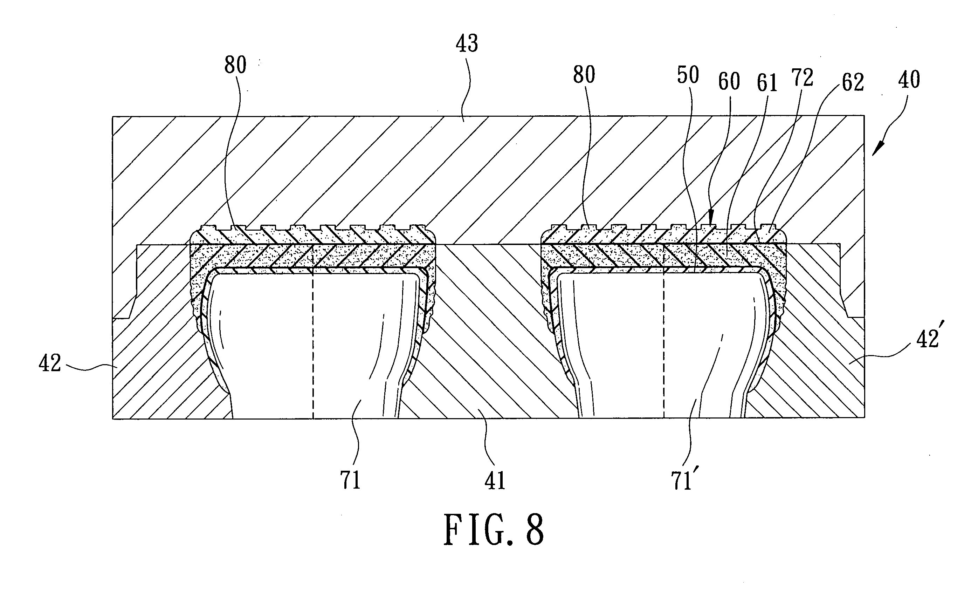

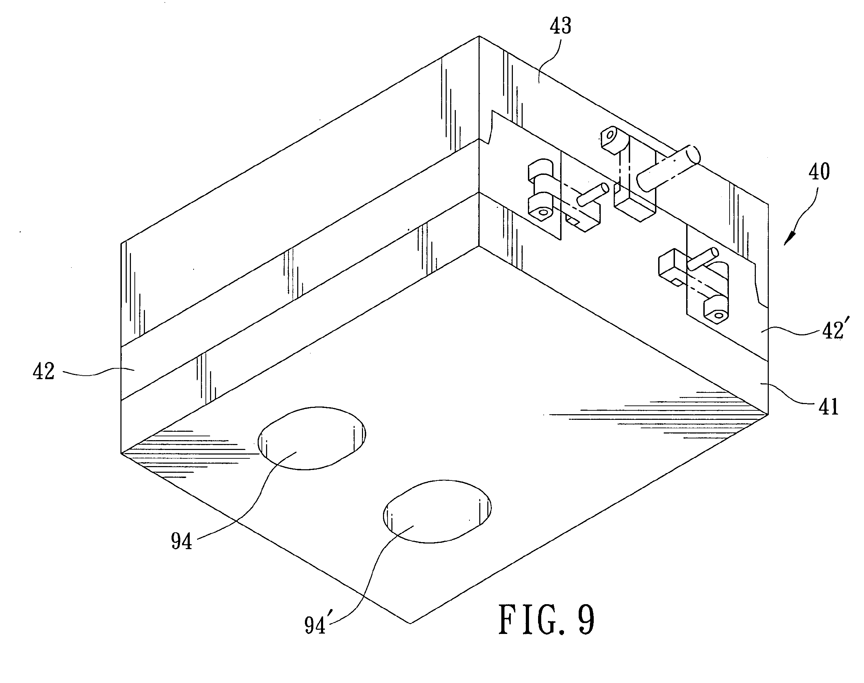

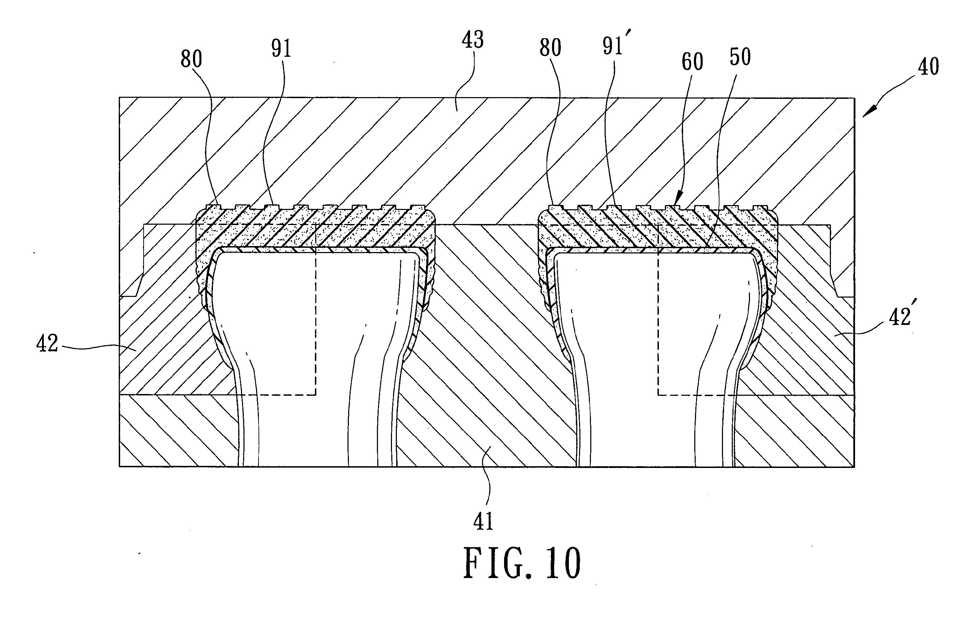

Referring to Figures 3, 4, 5, 6, and 7, a preferred embodiment of a method for making a pair of shoes 80 according to this invention includes the following steps:
A) preparing a mold 40:
   The first example of the mold 40 includes a first mold part 41, a second mold part 42, a third mold part 42', and a cover part 43.
   The first mold part 41 is adapted to receive a part of each of two uppers 50 and a part of each of two sole units 60.
   The second mold part 42 is adapted to receive the other part of one of the uppers 50 and the other part of one of the sole units 60, and is connected pivotally to the first mold part 41 to move leftward or rightward relative to the first mold part 41.
   The cover part 43 is adapted to receive the remaining part of the sole units 60 and is connected pivotally to the first mold part 41 so as to move upward or downward.
   The first and second mold parts 41, 42 and the cover part 43 cooperatively define a left assembly cavity 90 that has an opening 94 opposite to the cover part 43 and that is adapted for extension of a last 71.
   The cover part 43 has left and right cover cavities 91, 91'. The first mold part 41 has left and right first cavities 92, 92'. The second mold part 42 has a second cavity 93 to combine with the left first cavity 92 of the first mold part 41 and the left cover cavity 91 of the cover part 43 to define the left assembly cavity 90.
   The third mold part 42' is opposite to the second mold part 42, is connected pivotally to the first mold part 41 to move leftward or rightward, and has a third cavity 93' to combine with the right first cavity 92' of the first mold part 41 and the right cover cavity 91' of the cover part 43 to form a right assembly cavity 90' that has an opening 94' opposite to the cover part 43 and that is adapted for extension of a last 71'.
   The second and thirdmold parts 42, 42' are connected pivotally to the first mold part 41 via first pivoting units 461, and can be locked to the first mold part 41 using first locking members 463. The cover part 43 is connected pivotally to the first mold part 41 via second pivoting units 462 and can be locked to the first mold part 41 using second locking members 464.
B) preparing a pair of the uppers 50 and a pair of the sole units 60:
   The uppers 50 and the sole units 60 are formed in advance. The uppers 50 can be made of any well-known materials, such as a thermoplastic material, leather, or the like. The sole units 60 can be made of any well-known material, preferably, a thermoplastic material, more preferably, EVA (ethylene vinyl acetate) copolymer.
C) adhering the uppers 50 to the sole units 60:
   The uppers 50 and the sole units 60 are applied with adhesive 72. The uppers 50 are then sleeved on the lasts 71, 71' , respectively, and the sole units 60 are adhered to the uppers 50 via the adhesive 72, respectively. Alternatively, the uppers 50 can be adhered to the sole units 60 via the adhesive 72, respectively, and are then sleeved on the lasts 71, 71'.
D) placing the uppers 50 and the sole units 60 in the first mold part 41:
   The sole units 60 and the uppers 50 sleeved on the lasts 71, 71' are placed in the first mold part 41 of the mold 40.
E) turning the second and third mold parts 42, 42' to the first mold part 41:
   The second and third mold parts 42, 42' are turned to the first mold part 41 so that the first mold part 41 together with the second and third mold parts 42, 42' presses left and right sides of each of the uppers 50 and each of the sole units 60.
F) turning the cover part 43 to the first, second, and third mold parts 41, 42, 42':
   The cover part 43 is turned to the first, second, and third mold parts 41, 42, 42' so that the cover part 43 presses the sole units 60 to close the mold 40. The mold 40 is locked using the first and second locking members 463, 464.
G) Heating the mold 40:
   The mold 40 is heated and pressed so that the uppers 50 and the sole units 60 are assembled correspondingly. The heating duration preferably ranges from 1 to 7 minutes, and the heating temperature preferably ranges from 100 to 150 °C.
H) cooling the mold 40:
   The mold 40 is cooled after the heating procedure. The heating and cooling steps can be conducted by any manner well known in the art, such as the heating and cooling manners disclosed in the aforesaid prior art.
I) opening the mold 40:
   The mold 40 is unlocked and then opened to obtain the shoes 80.
   Referring to Figure 8, each of the sole units 60 includes an insole 61 and an outsole 62 adhered to each other. Preferably, the outsole 62 is made of an abrasion resistant material, such as rubber. The insole 61 is adhered to one of the uppers 50, and the outsole 62 is placed in the mold 40 and is applied with the adhesive 72 prior to the step E).
   Referring to Figures 9 and 10, in the second example of the mold 40 useful in the preferred embodiment, the first mold part 41 can be formed with a protruded portion so as to enhance the firmness of the mold 40 in a closed state.
   In preparing the sole units 60 and the uppers 50, the sole units 60 can further include a reinforcing member and the uppers 50 can further include a decorative member.
   While the molds 40 illustrated in the examples include the second and third mold parts 42, 42', the molds 40 can include only one of the second and third mold parts 42, 42' so as to make one shoe 80 at a time.
   In view of the aforesaid, the mold 40 of this invention has the following advantages:
      1. Since the second mold part 42, the third mold part 42', and the cover part 43 are pivotally connected to the first mold part 41, the lasts 71, 71' can be easily and precisely positioned in the mold 40. Therefore, the waste material produced after the thermal assembly can be reduced, or even eliminated.
      2. Since the second mold part 42, the third mold part 42', and the cover part 43 are pivotally connected to the first mold part 41, it is not necessary to perform adjustment and calibration for the first, second, and third mold parts 41, 42, 42', and the cover part 43 prior to the thermal assembly. Therefore, the production time can be reduced and the production efficiency can be increased.
      3. Since a pair of the shoes 80 can be produced at one time, the production efficiency is increased as compared to the aforesaid prior art.

## Claims

1. A method for making a shoe (80), **characterized by**:
a) preparing a mold (40) that includes a first mold part (41), a second mold part (42) connected pivotally to the first mold part (41), and a cover part (43) connected pivotally to one of the first and second mold parts (41, 42);
b) placing an upper (50) and a sole unit (60) in the first mold part (41);
c) turning the second mold part (42) to the first mold part (41) so that the first and second mold parts (41,42) press left and right sides of each of the upper (50) and the sole unit (60); and
d) turning the cover part (43) to the first and second mold parts (41, 42) so that the cover part (43) presses the sole unit (60).

2. The method as claimed in Claim 1, further
**characterized by** a step of adhering the upper (50) to the sole unit (60) before the step of placing the same in the first mold part (41).

3. The method as claimed in Claim 1 or 2, further **characterized by** a step of sleeving the upper (50) on a last (71) before the step of placing the upper (50) and the sole unit (60) in the first mold part (41).

4. The method as claimed in any one of the preceding claims, further
**characterized by** a step of heating the mold (40) after step d).

5. A mold (40) for making a shoe (80) having an upper (50) and a sole unit (60), **characterized by**:
a first mold part (41) adapted to receive a part of the upper (50) and a part of the sole unit (60);
a second mold part (42) adapted to receive the other part of the upper (50) and the other part of the sole unit (60), and connected pivotally to said first mold part (41) to move leftward or rightward relative to said first mold part (41); and
a cover part (43) adapted to receive the remaining part of the sole unit (60) and connected pivotally to one of said first and second mold parts (41, 42) so as to move upward or downward;
wherein said first and second mold parts (41, 42) and said cover part (43) cooperatively define an assembly cavity (90) that has an opening (94) opposite to said cover part (43) and that is adapted for extension of a last (71).

6. The mold (40) as claimed in Claim 5, **characterized in that** said cover part (43) has left and right cover cavities (91, 91'), said first mold part (41) has left and right first cavities (92, 92'), and said second mold part (42) has a second cavity (93) to combine with said left first cavity (92) and said left cover cavity (91) to define said assembly cavity (90), said mold (40) further including a third mold part (42') connected pivotally to said first mold part (41) to move leftward or rightward and having a third cavity (93') to combine with said right first cavity (92') and said right cover cavity (91') to form another assembly cavity (90').

7. The mold (40) as claimed in Claim 6, **characterized in that** said cover part (43) is connected pivotally to said first mold part (41).
